# EUROPÄISCHE PATENTANMELDUNG

(11) **EP 1 102 013 A2**
(43) Veröffentlichungstag der Anmeldung: **23.05.2001**
(21) Anmeldenummer: 00124694.1
(22) Anmeldetag: 11.11.2000
(51) Int. Cl.: F24F 3/16

(54) **Filtersystem**

(30) Priorität: 20.11.1999 DE 19955905
(71) Anmelder: FILTERWERK MANN & HUMMEL GMBH, 71638 Ludwigsburg (DE)
(72) Erfinder: Kames, Jost, Dr., 42781 Haan (DE)
(74) Vertreter: Voth, Gerhard, Dipl.-Ing.

(57) **Zusammenfassung**

Es wird ein Filtersystem 10 vorgeschlagen, daß zum Herausfiltern von Stoffen dient und eine Einheit zur Standzeitüberwachung eines Filtermediums 16 aufweist. Das Filtersystem 10 umfaßt einen Rohlufteinlaß 11 mit einer anschließenden Rohluftseite 12, ein Filter 15 mit einem Filtermedium 16, eine Reinluftseite 13 und einen Reinluftauslaß 14. Zur Standzeitüberwachung des Filtermediums 16 ist ein erster Gassensor S1 vor dem Filtermedium 16 und ein zweiter Gassensor S2 hinter dem Filtermedium 16 angebracht. Beide Gassensoren S1, S2 reagieren auf den selben, in der Luft vorhandenen Stoff empfindlich. Die Gassensoren S1, S2 übertragen ihre Meßwerte mit Datenüberträgern 17 an eine Steuereinheit 18. Die Steuereinheit 18 ermittelt die Differenz von S1 zu S2, welche anschließend mit einem der beiden Werte verglichen wird. Anhand dieses Ergebnisses kann eine Aussage über die Standzeit des Filtermediums 16 getroffen werden.

## Beschreibung

Die Erfindung betrifft ein Filtersystem nach der Gattung des Patentanspruches 1. Außerdem betrifft die Erfindung ein Verfahren zur Steuerung des oben genannten Filtersystems.

Es ist aus der EP 0 623 376 A1 eine Vorrichtung für eine Standzeit-Überwachung von Filtereinrichtungen in raumlufttechnischen Anlagen bekannt. Diese weist einen Rohlufteinlaß, ein Filter und einen Reinluftauslaß auf. Im Zuströmbereich vor dem Filter ist zumindest eine Einlaßdüse für ein Prüfmedium vorgesehen, die an eine Eingabeeinrichtung angeschlossen ist. Zwischen Einlaßdüse und Filter ist zumindest ein Sensor zur Konzentrationsmessung des Prüfmediums angeordnet, wobei dem Filter ein weiterer Sensor zur Konzentrationsmessung des Prüfmediums nachgeschaltet ist. Eine Steuer- und/oder Regelvorrichtung zur automatischen Durchführung von Testmessungen in definierten Zeitabständen in der Größenordnung von Stunden oder Tagen ist vorgesehen. Die Steuer- und/oder Regelvorrichtung ist mit der Eingabeeinrichtung zur automatischen Eingabe von Prüfmedium in den definierten Zeitabständen verbunden. Desweiteren ist ein Tank zur Lagerung des Prüfmediums vorgesehen, von dem aus das Prüfmedium in die Filtereinrichtung eingeleitet wird.

Der Einsatz eines Prüfmediums zur Standzeitüberwachung eines Filterelementes stellt jedoch für das Filterelement und für die, in dem belüfteten Raum befindlichen Personen eine zusätzliche Belastung dar. Desweiteren benötigt der Tank einen Einbauraum, der zugänglich sein muß, um den entleerten Tank wieder mit dem Prüfmedium aufzufüllen. Dieser Aufbau einer Standzeitüberwachung ist außerdem aufwendig und teuer in der Anschaffung. Desweiteren fallen bei jeder Messung Kosten für das verbrauchte Prüfmedium an.

Aufgabe der Erfindung ist daher die Schaffung eines Filtersystems, welches über eine kostengünstige Standzeitüberwachung eines Luftfilterelementes verfügt, wobei eine Vorhersage über den Zeitpunkt eines zu erwartenden Filterdurchbruches getroffen werden kann und ausschließlich das zu filternde Medium zur Ermittlung des Filterdurchbruches verwendet wird. Diese Aufgabe wird durch die Merkmale des Patentanspruches 1 gelöst.

### Vorteile der Erfindung

Das erfindungsgemäße Filtersystem ist in vorteilhafter weise geeignet, eine kostengünstige Standzeitüberwachung zu realisieren, die keinerlei zusätzlicher Belastungen für das Filtermedium oder die Umwelt darstellt. Hierzu sind zwei Gassensoren in das Filtersystem, welches mindestens einen Rohlufteinlaß mit einer anschließenden Rohluftseite, einen Reinluftauslaß mit einer anschließenden Reinluftseite und ein Filter, welches zwischen der Roh- und der Reinluftseite angeordnet ist, aufweist, integriert. Dieses Filtersystem kann als Geruchsfilter für Kraftfahrzeuginnenräume oder Gebäudezuluftleitungen eingesetzt werden. Ein erster Gassensor ist auf der Rohluftseite und ein zweiter Gassensor auf der Reinluftseite angeordnet. Beide Gassensoren reagieren auf ein und den selben organischen Stoff in der Luft empfindlich. Die Gassensoren können z.B. Metalloxidsensoren sein, die aus gesinterten Metalloxiden mit einem Bindemittel zusammengebacken sind. Die Empfindlichkeit der Gassensoren kann in einem definierten Verhältnis zueinander stehen. Hierbei sind Ausführungen, die auf der Reinluftseite einen Gassensor mit einer größeren Empfindlichkeit, als auf der Rohluftseite aufweisen, denkbar. Dadurch können auch geringere Stoffkonzentrationen sensiert und als Signale an eine Steuereinheit weitergeleitet werden. Die Signale der Gassensoren werden in der Steuereinheit verarbeitet, wo die Differenz der eingegangenen Signale gebildet wird. Anhand dieser Differenz sind Aussagen über den Zustand des Filtermediums zu treffen. Bei Gassensoren unterschiedlicher Empfindlichkeit kann in der Steuereinheit ein Umrechnungsfaktor hinterlegt sein, damit die Differenz der eingegangenen Signale der realen Stoffdifferenz entspricht. Wenn in der Steuereinheit kein Umrechnungsfaktor hinterlegt ist, dann kann mit einer Wertetabelle die Differenz der Gassensoren ausgewertet werden.

Eine besondere Ausführungsform des Filtersystems sieht die Verwendung von identischen Gassensoren vor. Hierbei sind keine Umrechnungsfaktoren notwendig, daher kann eine einfache und preiswerte Steuereinheit verwendet werden. Desweiteren besteht bei der Montage des Filtersystems nicht die Gefahr einer Verwechslung der Gassensoren von der Roh- und Reinluftseite, außerdem verringert sich durch die Verwendung von identischen Gassensoren der logistische Aufwand in der Fertigung und der Montage.

Es ist vorteilhaft, die Differenz der Signale in definierten Intervallen zu berechnen. Hierbei können die Intervalle z.B. Stunden oder Tage betragen. Desweiteren können die Berechnungsintervalle von Ereignissen abhängig sein. Hierbei kann als Meßpunkt z.B. das Einschalten des Filtersystemes hinterlegt sein, wodurch nach jedem Einschalten des Filtersystems eine Messung durchgeführt wird.

Gemäß einer weiteren Ausgestaltung der Erfindung kann zur Berechnung der Differenz der Signale für den Gassensor auf der Rohluftseite ein Schwellenwert hinterlegt sein. Hierbei wird nur dann die Differenz der Signale gebildet, wenn der Gassensor auf der Rohluftseite einen definierten Schwellenwert überschreitet. Der Schwellenwert kennzeichnet einen Zustand, in dem eine besonders hohe Konzentration des auszufilternden Stoffes vorhanden ist, auf welchen die beiden Gassensoren empfindlich reagieren. Der Schwellenwert kennzeichnet somit eine Geruchsspitze, bei der eine Berechnung der Differenz besonders aussagefähig ist. Bei einem neuen Filterelement mit hoher Adsorptionsfähigkeit für den auszufilternden Stoff, ist die Differenz der Signale hoch, da Rohluftseitig eine hohe und Reinluftseitig eine niedrige Konzentration des auszufilternden Stoffes gemessen wird. Bei einem verbrauchten Filterelement ist bei einem rohluftseitig hohem Wert auch auf der Reinluftseite ein mittlerer bis hoher Wert zu messen, wodurch eine niedrige Differenz der Signale berechnet wird.

Eine vorteilhafte Ausgestaltung der Erfindung sieht eine Ausgabeeinheit vor, auf welcher die Notwendigkeit eines Filteraustausches dargestellt wird. Hierzu kann ein akustisches oder digitales Zeichen erfolgen. Das digitale Zeichen kann z.B. in einem Regelprogramm Reaktionen auslösen, wie z.B. die Umleitung der Luft in einen anderen Filterkreislauf oder die Abschaltung der Luftzufuhr. Dieses Zeichen wird erst dann ausgegeben, wenn die Differenz der Signale einen bestimmten Wert unterschreiten. Das Zeichen zum Filteraustausch kann aber z.B. auch auf einer Anzeigetafel, einem Bedienerpult oder direkt auf dem Filtergehäuse ausgegeben werden.

Eine besondere Ausführungsform der Ausgabeeinheit, stellt die optische Anzeige des Zeichens auf z.B. einem Bedienerpult oder Instrumentenanzeige dar. Das Zeichen kann mit Licht, welches insbesondere Symbole beleuchtet, oder mit einem mechanischer Schalter, der je nach Filterzustand Farben oder Symbole anzeigt, darstellt werden. Hierbei kann in Abhängigkeit der Differenz ein blinkendes oder konstantes Licht leuchten. Es sind auch Ausführungen mit mehreren Lichtzeichen denkbar, die z.B. die Häufigkeit der unterschrittenen Differenzen anzeigen, wenn das Filter nicht sofort ausgetauscht wurde oder die Höhe der Differenz kann angezeigt werden, wobei farbliche Variationen der Lichtzeichen vorgesehen sein können.

Eine alternative Lösung zur Steuerung eines Filtersystemes ist darin zu sehen, daß die Differenz der Signale der Gassensoren gebildet und mit dem Signal des Gassensors auf der Roh- oder Reinluftseite verglichen wird. Durch Vergleichen der Differenz mit einem der einzelnen Signale, kann die Differenz richtig interpretiert werden. Wenn das Rohluftseitige Signal niedrig ist, dann kann die Steuereinheit auch bei einem neuen Filtermedium nur eine geringe Differenz ermitteln. Durch das Vergleichen der Differenz mit einem einzigen Signal der Gassensoren kann mit einer einfachen und somit preiswerten Steuereinheit eine qualifizierte Aussage über die Standzeit getroffen werden.

Um einen Referenzwert zu definieren, bei dem die Standzeit erreicht ist und das Filtermedium ausgetauscht werden soll, kann das Signal des Gassensors auf der Rohluftseite mit einem Faktor, insbesondere mit einem Faktor kleiner 1, multipliziert werden. Der Faktor ist frei wählbar, wodurch eine Ausgabe des Standzeitendes des Filters an entsprechende Einsatzbedingungen, je nach zulässiger Stoffmenge auf der Reinluftseite, angepaßt werden kann. Ist die Differenz der Signale kleiner als der Referenzwert, so ist das Filtermedium verbraucht und muß ausgetauscht werden. Ist die Differenz dagegen größer, weist das Filtermedium noch eine ausreichende Adsorptionsfähigkeit auf und das Sandzeitende ist noch nicht erreicht. Soll die Differenz der Signale der Gassensoren mit dem Signal des Gassensors auf der Reinluftseite verglichen werden, so kann dies direkt, ohne einen Faktor, erfolgen. Es kann z.B. der Zustand als Standzeitende definiert werden, bei dem die Differenz der Signale gleich dem Wert des Signals des Gassensors auf der Reinluftseite ist. Die Verwendung eines Faktors zur Bestimmung des Referenzwertes ist jedoch auch möglich. Bei einem Faktor kleiner 1 wird das Standzeitende später angezeigt. Dadurch wird bei dem Filter mit einem schlechteren Adsorptionsverhalten noch nicht das Standzeitende angezeigt, sondern erst, wenn eine zuvor definierte Grenze unterschritten wird. Bei einem Faktor größer 1 wird das Standzeitende früher angezeigt, wodurch das Filtermedium früher ausgetauscht werden soll und die maximal durchtretende Stoffmenge des auszufilternden Stoffen geringer ist, als bei einem Faktor kleiner 1.

Gemäß einer weiteren Ausgestaltung ist der Referenzwert so zu bestimmen, daß ein Filteraustausch vor dem Standzeitende, welches einen Filterdurchbruch zur Folge hat, vorgenommen werden kann. Als Filterdurchbruch wird der Zustand bezeichnet, bei dem das Filtermedium nicht mehr in der Lage ist, eine ausreichende Stoffkonzentration des auszufilternden Stoffes aufzunehmen und die Stoffkonzentration des auszufilternden Stoffes auf der Reinluftseite unter einer definierten Schwelle zu halten, die z.B. für den Menschen nicht wahrnehmbar oder gesundheitsschädlich ist.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnungen

Ein Ausführungsbeispiel der Erfindung wird nachfolgend anhand der Zeichnungen erläutert.

Hierbei zeigt
- Figur 1: eine schematische Darstellung eines Filtersystems und
- Figur 2: ein Signaldiagramm.

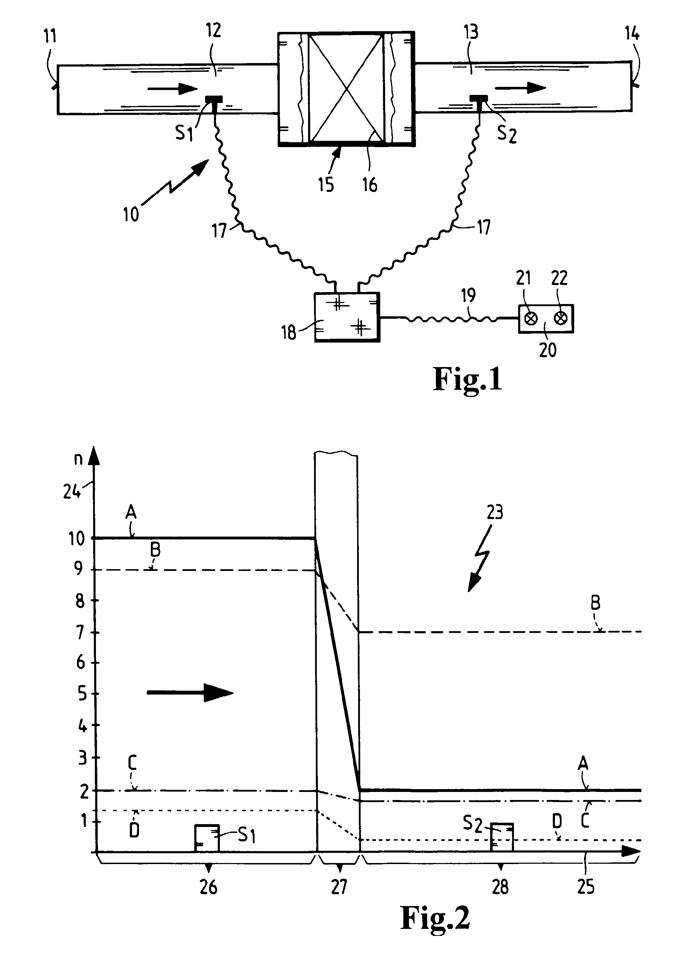

In Figur 1 ist ein Filtersystem 10 in schematisch dargestellt. Das Filtersystem 10 weist einen Rohlufteinlaß 11 mit einer nachfolgenden Rohluftseite 12 und eine Reinluftseite 13 mit einem anschließenden Reinluftauslaß 14, der in z.B. einen Fahrgastinnenraum mündet, auf. Zwischen die Roh- und Reinluftseite 12, 13 ist ein Filter 15 mit einem Filtermedium 16 eingebracht. Vor dem Filter 15 ist ein erster Gassensor S1 und nach dem Filter 15 ein zweiter Gassensor S2 angeordnet. Beide Gassensoren S1, S2 verfügen über je einen Datenüberträger 17, der Signale der Gassensoren S1, S2 an eine Steuereinheit 18 überträgt. Der Datenüberträger 17 kann, wie dargestellt, ein Kabel sein, oder die von den Gassensoren S1, S2 erzeugten Signale mit Infrarot- oder Funktechnik übermitteln. Die übermittelten Signale werden von der Steuereinheit 18 verarbeitet, wobei die Differenz der Signale gebildet wird. Diese Differenz wird über eine Datenleitung 19 an eine Ausgabeeinheit 20 geleitet, wo das Ergebnis der Messung dargestellt wird. Diese Ausgabeeinheit 20 weist bei diesem Ausführungsbeispiel eine grüne Lampe 21 und eine rote Lampe 22 auf und kann an diversen Stellen angebracht sein, wie z.B. direkt an dem Filter 15, an einer Kontrolltafel oder in einem Fahrgastinnenraum (nicht dargestellt). Wenn das Filtermedium 16 noch eine ausreichende Adsorptionskapazität aufweist, dann leuchtet die grüne Lampe 21. Ist das Filtermedium 16 verbraucht und muß erneuert werden, dann leuchtet die rote Lampe 22. Durch die Anordnung mit zwei Lampen 21, 22 muß in Abhängigkeit des Ergebnisses eine Lampe 21, 22 leuchten, wodurch gewährleistet ist, daß die Gassensoren S1, S2, die Datenüberträger 17, die Steuereinheit 18 und die Datenleitung 19 funktionieren. Leuchtet nach einer Messung keine Lampe 21, 22, so liegt ein Defekt vor.

In Figur 2 ist ein Signaldiagramm 23 in einem Koordinatensystem dargestellt, wobei eine Stoffkonzentration n an einer senkrechten Achse 24 aufgetragen ist und eine horizontale Achse 25 den Aufbau des Filtersystems 10 gemäß Figur 1 darstellt. Hierbei wird die horizontale Achse 25 in einen Rohluftbereich 26, einen Filterbereich 27 und einen Reinluftbereich 28 eingeteilt. Der erste Gassensor S1 ist in dem Rohluftbereich 26 und der zweite Gassensor S2 in dem Reinluftbereich 28 angeordnet. Der Filterbereich 27 wird in Pfeilrichtung durchströmt. Die Standzeit bei diesem Beispiel ist so definiert, daß solange das Filtermedium 16 gemäß Figur 1 eine Stoffkonzentration n der gleichen Höhe, wie ein Sensor-Schwellenwert von S2 ist, adsorbiert, kein austauschen des Filtermediums 16 erfolgen muß. Somit entspricht der Sensor-Schwellenwert S2 einem Referenzwert. Bei Erreichen eines Zustandes, in dem das Filtermedium eine nicht mehr ausreichende Adsorptionsfähigkeit besitzt, wird auf der Ausgabeeinheit angezeigt, daß das Filtermedium ausgetauscht werden muß. Möchte man einen anderen Referenzwert wählen, so ist ein Faktor vorzusehen, mit dem der Sensor-Schwellenwert S2 multipliziert wird.

In dem Signaldiagramm 23 von Figur 2 sind vier Kennlinien A bis D eingetragen, deren Signale in der folgenden Tabelle zusammengefaßt sind.

| | Sensor-Schwellenwert von S1 | Sensor-Schwellenwert von S2 | Differenz S1-S2 | Vergleich | Bewertung Filtermedium |
|---|---|---|---|---|---|
| Kennlinie A | 10 | 2 | 8 | S2<(S1-S2) | Gut |
| Kennlinie B | 9 | 7 | 2 | S2>(S1-S2) | Schlecht |
| Kennlinie C | 2 | 1,8 | 0,2 | S2>(S1-S2) | Schlecht |
| Kennlinie D | 1,3 | 0,3 | 1 | S2<(S1-S2) | gut |

Die Luft in Kennlinie A weist im Rohluftbereich 26 eine große Stoffkonzentration n=10 eines auszufilternden Stoffes auf. Der erste Gassensor S1 sensiert diesen Wert und leitet ihn an die Steuereinheit 18 gemäß Figur 1 weiter. Beim Durchströmen des Filterbereiches 27 wird ein großer Teil der Stoffkonzentration n ausgefiltert. Der zweite Gassensor S2 sensiert eine wesentlich geringere Stoffkonzentration n=2. Die Differenz der Sensor-Schwellwerte S1, S2 wird mit dem Sensor-Schwellenwert von S2 verglichen. Die Differenz der Gassensorwerte S1-S2 ist größer als der Gassensorwert S2, somit reicht die Filterkapazität des Filtermediums 16 aus und die grüne Lampe 21 gemäß Figur 1 leuchtet.

Die Luft in Kennlinie B weist rohluftseitig eine Stoffkonzentration n=9 und reinluftseitig eine Stoffkonzentration n=7 auf. Die Differenz der Sensor-Schwellwerte S1-S2 ist kleiner, als der Sensor-Schwellenwert S2, somit filtert das Filtermedium 16 keine ausreichende Stoffkonzentration n aus und muß ausgetauscht werden, was mit einer leuchtenden roten Lampe 22 gemäß Figur 1 angezeigt wird.

In Kennlinie C weist die Luft im Rohluftbereich 26 eine geringe Stoffkonzentration n=2 auf. In dem Reinluftbereich 28 sensiert der Gassensor S1 eine Stoffkonzentration n=1,8. Die Differenz der Sensor-Schwellwerte S1-S2 ist erheblich kleiner als der Sensor-Schwellenwert S2, hieraus ist deutlich zu erkennen, daß das Filtermedium 16 nicht mehr ausreichend Stoffe aus der Luft adsorbieren kann, daher ist ein Austausch des Filtermediums 16 erforderlich, was auf der Ausgabeeinheit 20 gemäß Figur 1 mit der roten Lampe 22 angezeigt wird.

In Kennlinie D sensiert der Gassensor S1 in dem Rohluftbereich 26 eine Stoffkonzentration n=1,3 und der Gassensor S2 in dem Reinluftbereich 28 eine Stoffkonzentration n=0,3. Im Vergleich der Differenz der Sensor-Schwellwerte S1-S2 mit dem Sensor-Schwellenwert S2, ist die Differenz der Sensor-Schwellwerte S1-S2 deutlich größer als der Sensor-Schwellenwert S2, somit ist das Filtermedium 16 noch voll gebrauchsfähig.

## Patentansprüche

1. Filtersystem (10), insbesondere für Kraftfahrzeuginnenräume, aufweisend zumindest einen Rohlufteinlaß (11), einen Reinluftauslaß (14), ein Filter (15), einen ersten Gassensor (S1) auf einer Rohluftseite (12), einen zweiten Gassensor (S2) auf einer Reinluftseite (13) und eine Steuereinheit (18), **dadurch gekennzeichnet**,
- daß die beiden Gassensoren (S1, S2) für mindestens einen, aus der Luft auszufilternden Stoff empfindlich sind, wobei dieser mindestens eine Stoff für beide Gassensoren (S1, S2) identisch ist,
- und daß dieser Stoff zur Erzeugung eines Signals der Gassensoren (S1, S2) verwendbar ist, wobei die Differenz der Signale in der Steuereinheit (18) berechenbar ist.

2. Filtersystem (10) nach Anspruch 1, dadurch gekennzeichnet, daß die Gassensoren (S1, S2) identisch sind.

3. Filtersystem (10) nach Anspruch 1 oder 2, dadurch gekennzeichnet, daß die Differenz der Signale in der Steuereinheit (18) in bestimmten Intervallen berechenbar ist.

4. Filtersystem (10) nach einem der Ansprüche 1 bis 3, dadurch gekennzeichnet, daß für den ersten Gassensor (S1) ein Schwellenwert hinterlegt ist, wodurch eine Berechnung der Differenz der Signale einleitbar ist.

5. Filtersystem (10) nach einem der vorangehenden Ansprüche, dadurch gekennzeichnet, daß die Notwendigkeit eines Filteraustausches auf einer Ausgabeeinheit (20) darstellbar ist.

6. Filtersystem (10) nach einem der vorangehenden Ansprüche, dadurch gekennzeichnet, daß die Differenz der Signale optisch auf der Ausgabeeinheit (20) darstellbar ist.

7. Verfahren zur Steuerung eines Filtersystemes (10) nach einem der Ansprüche 2 bis 6, dadurch gekennzeichnet, daß
- die Differenz der Gassensoren S1-S2 gebildet und mit S1 oder S2 verglichen wird, und
- bei Erreichen eines Referenzwertes ein Standzeitende anzeigt wird.

8. Verfahren zur Bestimmung des Referenzwertes nach einem der Ansprüche 1 bis 6, dadurch gekennzeichnet, daß das Filtersystem (10) nach Erreichen des Referenzwertes noch eine ausreichende Filterkapazität aufweist, um einen Filterdurchbruch zu verhindern.
